# EUROPEAN PATENT APPLICATION

(11) **EP 0 883 076 A2**
(43) Date of publication of application: **09.12.1998**
(21) Application number: 98304307.6
(22) Date of filing: 01.06.1998
(51) Int. Cl.: G06F 17/60

(54) **Network charge server**

(30) Priority: 04.06.1997 JP 146129/97
(71) Applicant: INTERNATIONAL BUSINESS MACHINES CORPORATION, Armonk, NY 10504 (US)
(72) Inventor: Kawazoe, Hiroshi, Yokohama-shi, Kanagawa-ken (JP)
(74) Representative: Zerbi, Guido Maria

(57) **Abstract**

It is the object of the present invention to provide a safe and an efficient charge method and system wherefore procedures for purchasing a product across a network are simplified. According to the present invention, provided are a safe and an efficient charge method and system wherefore the procedures for purchasing a product across a network are simplified. A charge server receives access requests from a customer; identifies the customer; identifies the contents owner for which access is requested and ascertains the location and the price of the contents, and the destination for the contents for reckoning a sale; accesses the contents rather than the customer who issued the access requests; transmits, from the contents server to the customer, the contents that have been transferred from a contents server to the charge server; and subtracts the price of the contents from customer information held by the charge server and adds the price for the contents to information at the destination for reckoning a sale.

## Description

### Field of the Invention

The present invention relates to a charge method and charge system for a network, and in particular to a charge method and a charge system for efficiently and safely charging for service that is provided a customer by a contents' owner.

### Description of the Background

Conventionally, a charge method or a charge system administered by a third party on a network, especially on the World Wide Web (WWW), is constituted by a customer, a server whereat contents are offered for sale, and a third party. First, the customer (to select a product) directly accesses the server whereat the contents are offered for sale, and then, to establish a payment method, selects a charge server operated by the third party. The charge server, operated by the third party, verifies the identity of the customer and transmits a service charge specification, and thereafter, the server whereat the contents are offered for sale transmits the contents directly to the customer.

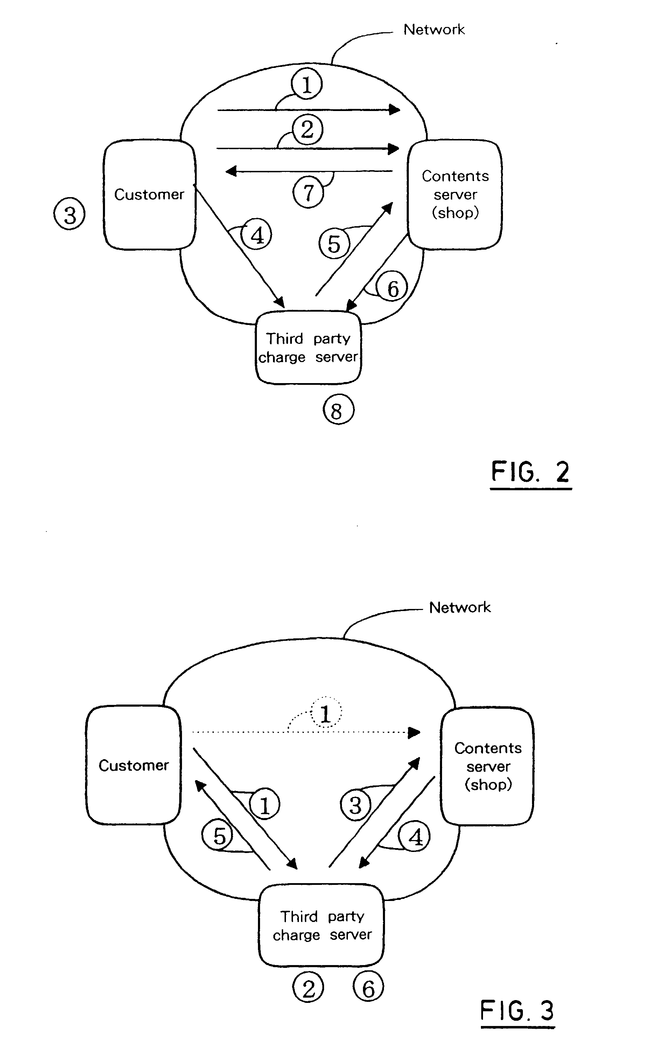

In Fig. 2 is shown, as a typical example, a conventional charge method by which sales transactions are administered by a third party. In Fig. 2, numerals in the circles denote the processing order, and the arrows describe the directions in which contents, requests or data are moved. As shown in Fig. 2, a customer (a client), a contents server that in this case is a shop, and a charge server operated by a third party are connected across a network. In the following description, the circled numerals are defined as steps.

At step 1, an access request is issued by the customer to access the contents server. This is a product selection step for the purchase of contents. At step 2, a payment method is selected. In this case, for the payment method a charge server provided by the third party is selected. At step 3, in response to the selection of the charge server, a dedicated application for the charge server of the third party is activated using the hardware of the customer. At step 4, by using the application, information concerning the identity of the customer and which product is selected is transmitted to the charge server. When the charge server has verified the identity of the customer, at step 5, sales specification information is sent to the contents server. Upon receipt of this information, at step 6, the contents server sends an acknowledgement message to the charge server. At substantially the same time, at step 7, the contents that constitute the requested product are sent to the customer. The charge server receives the acknowledgement message from the contents server and updates the balance for the customer and the sales information of the contents server. The process is thereafter terminated.

With this system, however, a user must separately select a product and a charge server, and the purchasing procedure is not direct. In the process for customer verification, the software provided by the third party must be loaded, even though temporarily, into the hardware of the customer, and activated to transmit, to the charge server, information to the effect that the identity of the user has been verified.

Plug-in software is frequently employed for the above software. The plug-in software is so designed that a function that is currently required can be downloaded and employed immediately. Conventionally, a customer (a client) downloads plug-in software from a charge server and employs it. And since plug-in software is required for each OS that is employed by a Web client on the Internet, plug-in software applications equivalent in number to the OSs that are in use must be prepared. A possibility exists, however, that the installation of plug-in software may be forgotten.

As another conventional technique, there is a password system for which a simple password is employed. With the password system, it is difficult to charge for each content item, so charges are imposed for each directory in which contents are stored. With the password system, if wiretapping occurs on a network, an authentication code that is generated and that is based on a password can be stolen. When this authentication code is employed thereafter, contents can be read and extracted without the input of a password being required. Since a password is established for each contents server holding contents, a unique method for charging for the reading and the extraction of the contents of a plurality of servers can not be performed. A consumer must settle accounts for contents that are provided by individual dealers, and this is very complex.

It is an object of the present invention to provide a technique which alleviates the above drawbacks.

According to the present invention we provide an access charge server for accessing the contents of a site on a network, comprising: (a) means for receiving from a customer access requests for the contents available at a specific contents server site; (b) means for identifying said customer; (c) means for identifying an owner of said contents, the location of said contents, a price for said contents, and a destination for said contents for reckoning a sale; (d) means for, rather than said customer, accessing said contents; (e) means for transmitting from said access charge server to said customer said contents that have been transferred from said contents server to said access charge server; and (f) means for subtracting said price for said contents from information for said customer at said access charge server, and for adding said price of said contents to information for said destination for reckoning for a sale.

Further according to the present invention we provide an access charge method for accessing the contents of a site on a network, the method comprising the steps of: (a) a charge server receiving an access request from a customer to access the contents held by a specific contents server; (b) said charge server identifying said customer; (c) said charge server identifying an owner of said contents for which the access request is issued, the location of said contents, the price of said contents, and the destination for reckoning a sale; (d) said charge server effecting access of said contents rather than said customer who issued said access request; (e) said charge server transmitting to said customer said contents after they are sent by said contents server to said charge server; and (f) said charge server subtracting said price of said contents from customer information held by in said charge server, and adding said price for said contents to information concerning said destination for reckoning a sale.

Also according to the present invention we provide claim a computer program product for enabling a computer to impose a charge when the contents of a site on a network are accessed, stored on a computer readable storage medium comprising: (a) computer readable program code means for receiving from a customer requests to access the contents available at a specific contents server; (b) computer readable program code means for identifying said customer; (c) computer readable program code means for identifying an owner of said contents for which the accesses are requested, the location of said contents, a price for said contents, and a destination for said contents for reckoning a sale; (d) computer readable program code means for accessing said contents rather than said customer who issued said access requests; (e) computer readable program code means for transmitting from said contents server to said customer said contents that have been transferred from said contents server to said computer; and (f) computer readable program code means for subtracting said price of said contents from customer information held by said computer and of adding said price of said contents to information for said destination for reckoning a sale.

### Brief Description of the Drawings

Fig. 1 is a diagram illustrating one example hardware arrangement of a charge server system that is employed for the present invention.

Fig. 2 is a conventional method for a charge process performed by a third party.

Fig. 3 is a method for a charge process of the present invention performed by a third party.

Fig. 4 is a schematic block diagram illustrating the charge system of the present invention.

Fig. 5 is a schematic flowchart showing the charge method of the present invention.

Fig. 6 is a detailed block diagram illustrating a charge server according to one embodiment of the present invention.

Fig. 7 is a diagram showing example entries for all databases.

Fig. 8 is a flowchart showing a request process performed by the charge server.

Fig. 9 is a detailed flowchart showing the request process performed by the charge server.

Fig. 10 is a detailed flowchart showing the request process performed by the charge server.

### Description of the Preferred Embodiments

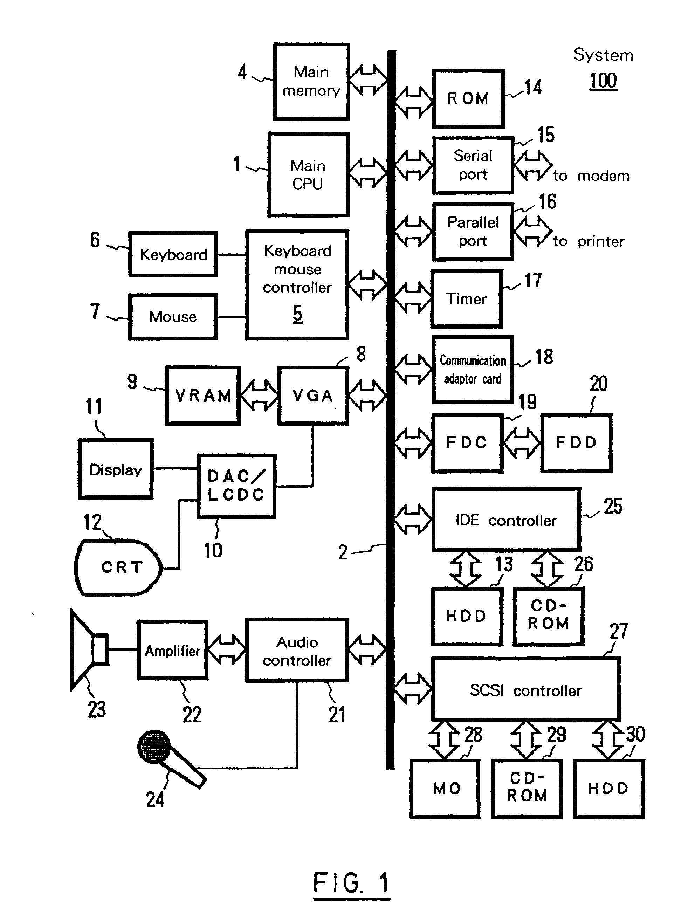

One embodiment of the present invention will now be described while referring to the accompanying drawings. In Fig. 1 is shown an example hardware structure of a charge server system that is employed for the present invention. A system 100 comprises a central processing unit (CPU) 1 and a memory 4. The CPU 1 and the memory 4 are connected via a bus 2 to a hard disk drive 13, an auxiliary storage device. A floppy disk drive 20 (or a drive for another storage medium, such as an MO disk or a CD-ROM) is connected to the bus 2 via a floppy disk controller 19.

A floppy disk (or a storage medium, such as an MO disk or a CD-ROM) is inserted into the floppy disk drive 20 (or a drive for an MO disk or a CD-ROM). Computer program code, which is employed together with an operating system to issue commands to the CPU 1, etc., and to implement the present invention, can be recorded on the floppy disk and the hard disk drive 13, and in a ROM 14. This computer program code is executed by loading it into the memory 4. The computer program code can be compressed, or can be divided into a plurality of code segments that are stored on a plurality of recording mediums.

The system 100 also includes user interface hardware components, such as a pointing device (a mouse or a joystick) 7 or a keyboard 6 for data input, and a display 12 for providing visual data for a user. It is possible for a printer to be connected via a parallel port 16 and for a modem to be attached at a serial port 15. The system 100 is connected to a network via the serial port 15 and the modem or via a communication adaptor 18 (to the Ethernet or a token ring), so that it can communicate with another computer (the personal computer of a customer or a contents server).

A loudspeaker 23 is used at which a speech signal, for which D/A (digital/analog) conversion has been performed by an audio controller 21, is received from an amplifier 22, and by which the speech signal is output as speech. The audio controller 21 performs A/D (analog/digital) conversion of speech information that is input by means of a microphone 24, so that speech information originating externally can be fetched into the system 100.

In accordance with the above description, it would be easily understood that the charge server system for the present invention can be provided by a common personal computer (PC), a workstation, a notebook PC, a palmtop PC, a network computer or a home electronic product, such as a television, that incorporates a computer, or by a combination of such devices. The above described components are merely examples, and not all of them are required components for the present invention.

In Fig. 3 is shown an outline of a charge method according to the present invention that is performed by a third party. In Fig. 3, the numerals in circles denote processing order, and the arrows describe the directions in which contents, requests or data move. In Fig. 3, a customer (a client), a contents server, which is a shop, and a charge server provided by a third party are connected across a network. At step 1, the customer accesses the contents server. This step is a product selection step for a purchase. In Fig. 3, one step 1 is described by a broken line and another step 1 is described by a solid line. The step 1 depicted by the broken line represents an access destination as viewed by the customer, and the step 1 depicted by the solid line represents the destination that the customer actually accesses. This configuration is implemented by the HyperText Transfer Protocol (HTTP) used on the Internet.

To describe the process simply, assuming a customer presses an associated button to select a product that is displayed on a screen, the configuration is so designed that when the button is depressed the charge server provided by the third party is accessed. The above configuration can be implemented, for example, by describing for the button the Uniform Resource Locator (URL), such as "1Cyber$ <A HREF="http://Ticketing_Server/...">", of the charge server for each product. In this case, lCyber$ represents the price of a product on the network, and is displayed on the button. The tag, <A HREF="http://Ticketing_Server/...">, means that by selecting that button a desired directory at Ticketing_Server is accessed. That is, although it is the intention of the customer to select a product available at the contents server, in reality the customer accesses the charge server. This linking method is commonly employed for HTTP, and it is not too much to say that the expansion of the Internet is the direct result of this linking method. In addition to the linking method, another configuration, according to which a charge server, instead of a contents server, receives a request for contents, can also be employed without deviating from the essence of the present invention.

At step 2, in response to the accessing of the charge server, the charge server identifies the customer and the product. The processing performed at this step mainly involves the use of a database as a reference source. At step 3, the charge server, rather than the customer, issues the request for the product to the contents server, and upon receipt of the request, the contents server transmits to the charge server the contents that constitute the requested product. At step 5, the charge server in turn sends the received contents to the customer. Simultaneously, at step 6, the charge server adjusts the accounts of the customer and the shop, subtracting the price of the product from the customer's account data and adding the price of the product to data for a sales reckoning destination. The processing is thereafter terminated.

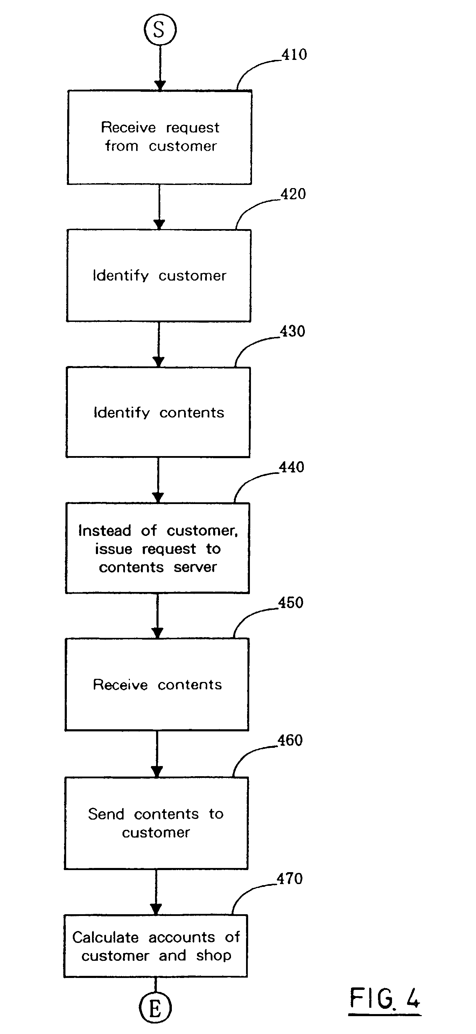

Fig. 4 is a flowchart showing the processing performed by a charge system according to the present invention. First, at customer request receipt block 410, a request is received from a customer. At customer identification block 420, the customer is identified. At contents identification block 430, the contents that constitute a selected product are identified. At customer action block 440, the charge server acts for the customer by issuing a purchase request for a product to the contents server. At contents receipt block 450, the product is received and at contents sending block 460, the received contents are transmitted to the customer. Finally, at account calculation block 470, the accounts for the customer and the shop are calculated.

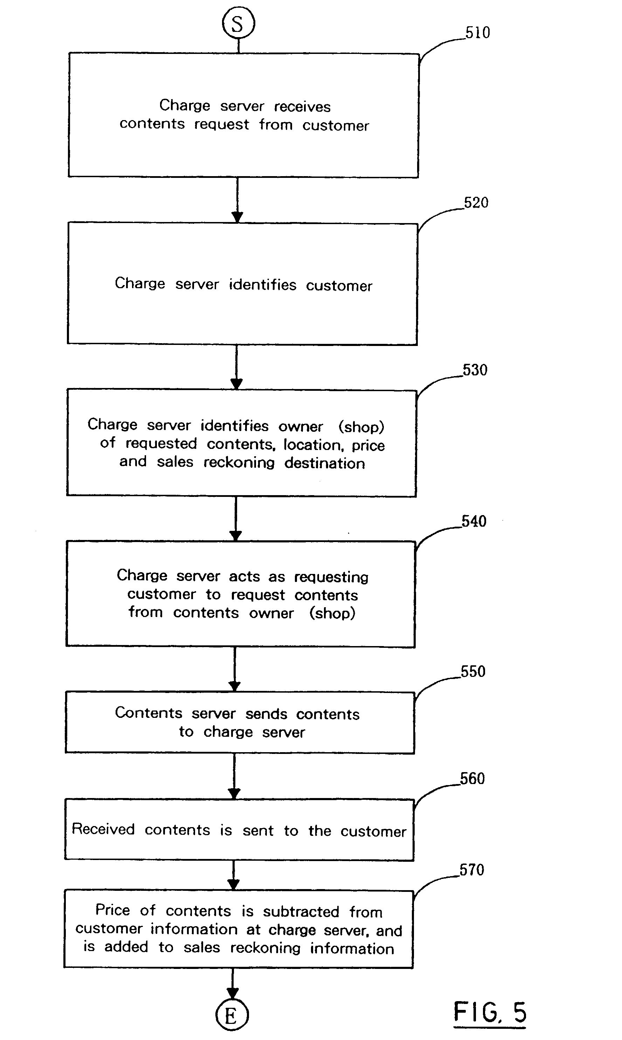

Similarly, Fig. 5 is a flowchart for all the processing performed in accordance with a charge method according to the present invention. At step 510, the charge server receives a request for the contents from the customer, and at step 520, identifies the customer. At step 530, the charge server identifies the owner (a shop) of the requested contents, the location of the product, the price of the product and a sales reckoning destination. Following this, at step 540, the charge server, rather than the customer who initiated the request, requests the contents from the owner of the contents. At step 550, the contents server sends the contents to the charge server, and at step 560, the charge server transmits the received contents at the step 560 to the customer. Finally, at step 570, the price of the product is subtracted from the customer's account data at the charge server, and the price of the product is added to the data for the sales reckoning destination.

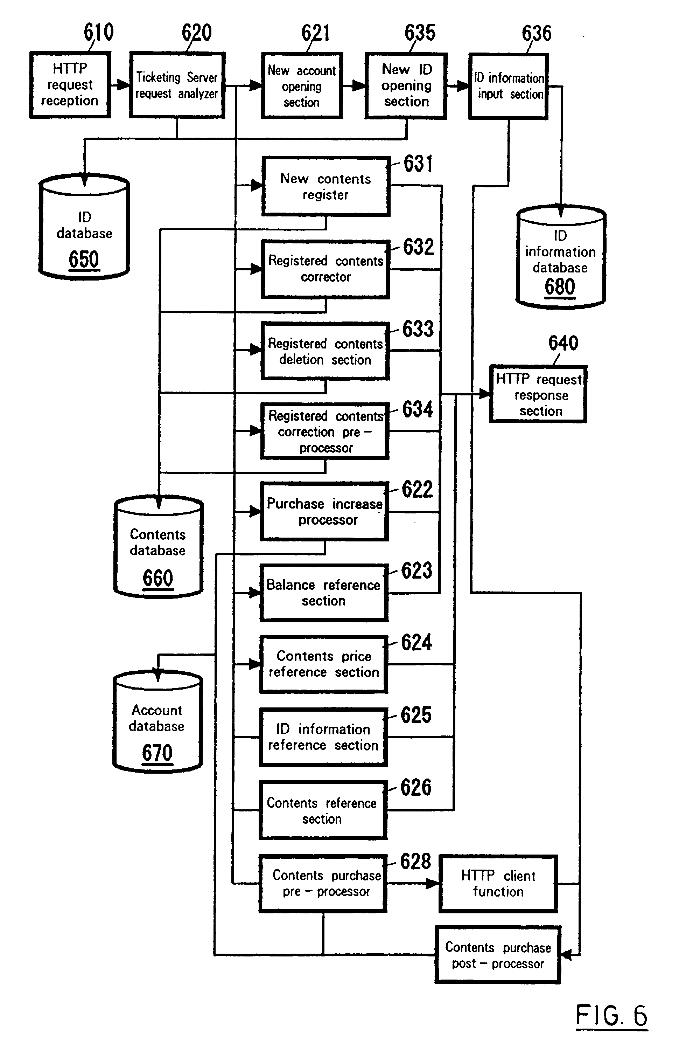

The embodiment of the present invention is shown in detail in Figs. 6 through 10. In Figs. 6 through 10, various processing sections can be added without deviating from the essence of the present invention. The following embodiment is merely one example, and the present invention is not limited to this embodiment. Fig. 6 is a detailed block diagram of the charge server. An HTTP request receipt block 610 receives a request from a Web client of a consumer. Upon receipt of the request, a service to be provided by a server is analyzed by a charge server (Ticketing Server) request analysis unit 620, and a corresponding request processing section processes the service. The request processing units are a new account opening section 621, a new contents registration section 631, a registered contents correction section 632, a registered contents deletion section 633, a registered contents correction pre-processing section 634, a purchase increase processing section 622, a balance reference section 623, a contents price reference section 624, an ID information reference section 625, a contents reference section 626, and a contents purchase pre-processing section 628.

After the processing is completed, the obtained results are transmitted, as an HTTP request response, to the Web client by an HTTP request response section 640. There are four databases (an ID database 650, a contents database 660, an account database 670 and an ID information database 680) that are referred to and are updated by the respective processing sections.

An account is opened at the server by the new account opening section 621. This account is used by a consumer and a contents dealer. When a new account is opened, an ID that serves as a key of the account database is prepared by a new ID opening section 635. The ID is unique for the server. With alteration of the ID being prevented, the Web client automatically transmits it to the server, and after the account opening process is completed, the ID is returned to the Web client through the HTTP request response section 640. To open a new account, an ID information input section 636 is employed to input a credit card number for settling all debts, an e-mail address, and the name of the client. The information is entered in an ID information database 680.

The new contents registration section 631 registers the contents provided via the Web server of a contents dealer and the account for that dealer in the contents database 660. At the server, the result of the registration is employed as a unique name to represent the contents, and is transmitted to the registerer by the HTTP request response section 640. The registerer employs this unique name to refer to the contents for which charges are imposed. The registered contents correction section 632 updates the contents in the contents database that is registered by using the unique name, and the registered contents deletion section 633 also uses the unique name when deleting the contents that are registered in the database. The registered contents correction pre-processing section 634 displays a list, which is linked to correction and deletion processing, for designated contents among those that are registered by the contents dealer. The purchase increase processing section 622 reduces the balance of the account of the consumer.

Before or after the debt is settled by remittance means, such as cash or a credit card, the balance is increased by an amount that is equivalent to the money value that is paid by the remittance means. The contents price reference section 624 furnishes the price of the contents designated by the unique name. The ID information reference section 625 provides ID information that was input when the new account was opened. The contents reference section 626 provides the registered contents that are designated The contents purchase pre-processing section 628 processes a contents request associated with the unique name that is received from the Web client of the consumer. At the same time the contents request is transmitted, the Web client also transmits the ID information for which alteration is prevented. The account of the consumer is identified by using the ID information. The contents registration information in the contents database 660 is acquired by using the unique name of the contents. The contents registration information includes the name of the account of the contents dealer.

For the calculation of the account, first, the price of the contents is temporarily subtracted from the account of the consumer. By employing the registration information for the contents, a server holding the contents, a port, a requesting method and a path are obtained, and a request for the contents is issued. When the contents are obtained from the contents server, they are sent to the Web client of the consumer, and at the same time, the money amount that was temporarily subtracted from the account of the consumer is regarded as the actual money to be subtracted, and this money amount is added to the account of the dealer.

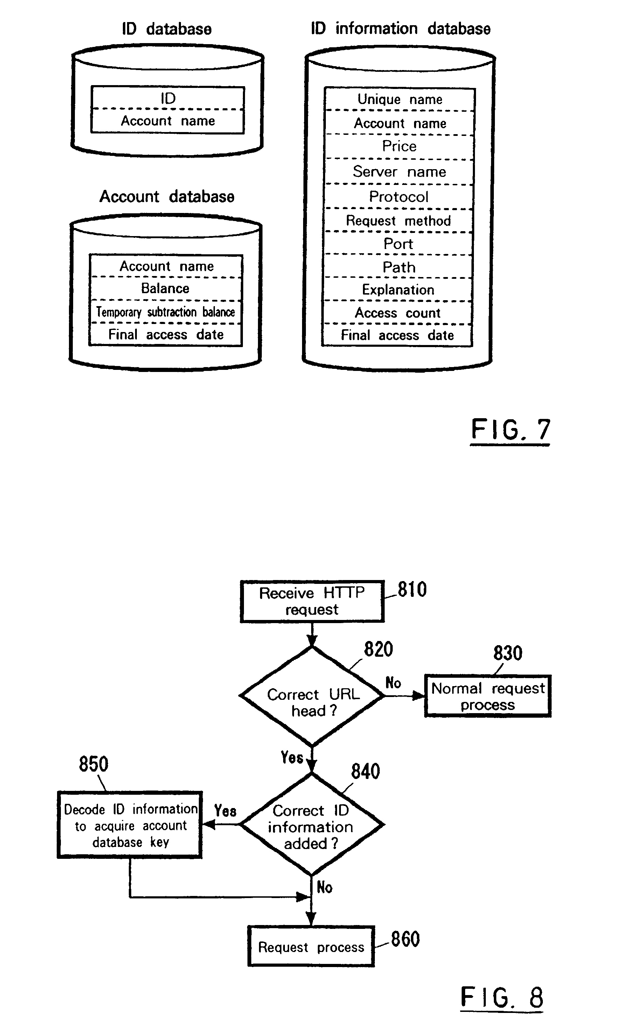

In Fig. 7 are shown example entries for the databases. The operations of the individual sections of the charge server will now be described. Fig. 8 is a flowchart showing request processing performed by the charge server. At step 810, an HTTP request is received from the Web client of a consumer, and is analyzed. At step 820, it is confirmed from the head of the request (the path), that is used for this server. When the head of the request indicates that it is not for the server, at step 830, a request response indicating an error is sent to the Web client. At step 840, a check is performed to determine whether ID information for which alteration is prevented has been added to the request. When ID information is associated with the request, at step 850, the ID information is changed to the account name, which is transferred to the following procedure. When ID information is not associated with the request, the process at step 850 is not performed, and at step 860 a request process is performed.

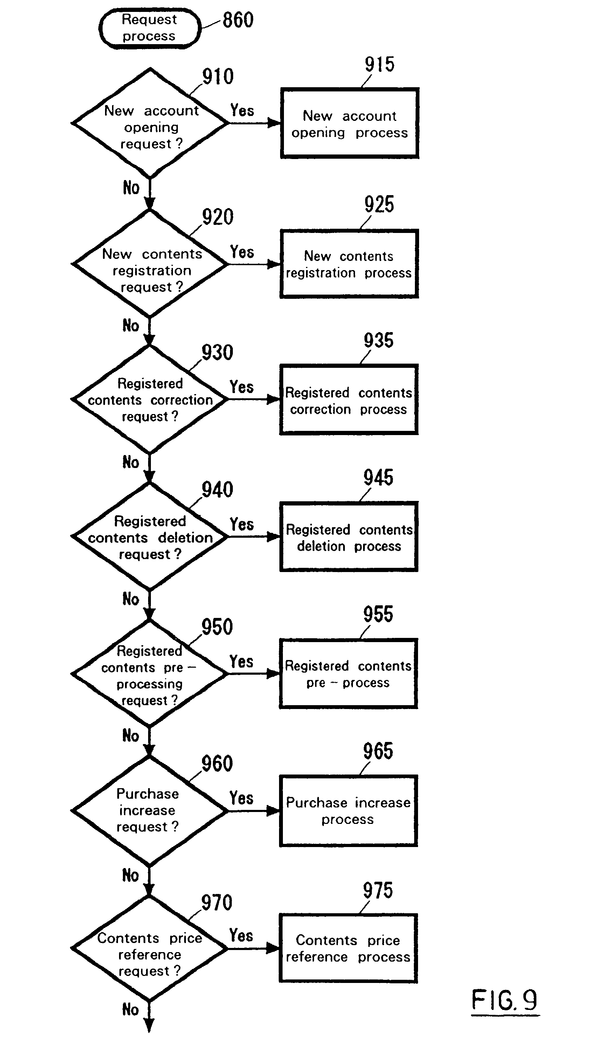

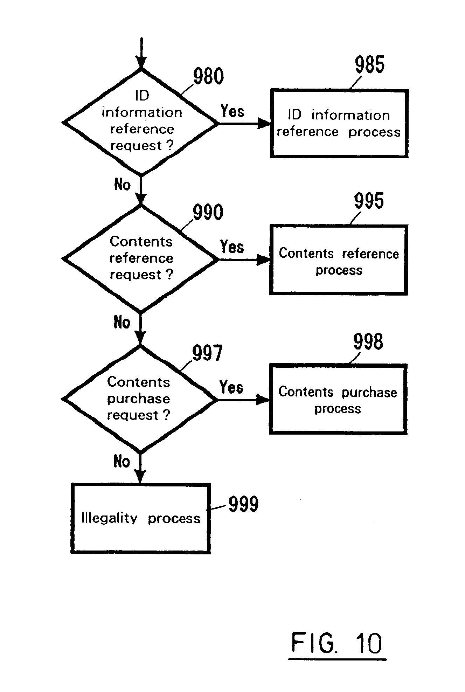

Figs. 9 and 10 are detailed flowcharts for the request process at step 860. The request from the Web client is analyzed to determine whether the request is a new account opening request 910, a new contents registration request 920, a registered contents correction request 930, a registered contents deletion request 940, a registered contents pre-processing request 950, a purchase increase request 960, a contents price reference request 970, an ID information reference request 980, a contents reference request 990 or a contents purchasing request 997, and a corresponding request process is performed. If the request from the client does not correspond to any of these requests, at step 999, a request response indicating a false request is sent to the Web client of the consumer.

When, at a new account opening process 915, an account name is received from the preceding process, program control moves to a purchase increase process 965. An external routine is called to determine whether there has been a purchase of contents by using a name, an e-mail address and a credit card number, or an authentication code that indicates payment for the contents has been made (this is issued by the organization operating the charge server), all of which are received from the customer Web client. In this external routine, the charge process for the credit card and the verification of the authentication code are performed by using the name, the e-mail address and the credit card number, or the authentication code that indicates the payment was made (this is issued by the charge server operating main body). The result is returned to the charge server program. If the purchasing of contents is not approved, the charge server sends a response to the Web client of the consumer. When the purchase is approved, an entry for the account database is prepared. A new name is generated as the account name. The balance is set to reflect a money amount corresponding to the price of the contents. The balance after money is temporarily subtracted is 0, and the final access date is the date when the processing is performed. Then the ID database entry is prepared, and following this, a new ID is prepared. The name of the account is the previously prepared account name. Then, an entry for the ID information database 680 is prepared. An account name is the previously prepared account name, while a name and an e-mail address are defined as data received from the Web client. A payment confirmation field is defined as data that is received from the external purchase determination routine. A request response indicating that the new account has been opened is transmitted.

When the account name is not received from the preceding process, illegality processing is performed in a new contents registration process 925, and a message to the effect that an illegal operation was performed is transmitted as a request response to the Web client of the contents dealer. The request for registration received from the Web client of the contents dealer is analyzed. As a result of the analysis, the price of the contents, the server name of the contents dealer, the protocol name, the request method for the server of the contents dealer, the port number of the server of the contents dealer, the path to the contents, and a description of the contents are obtained, and an entry for the contents database 660 is prepared. A new unique name is prepared, and an account name is defined as the account name that accompanies the request. The price, the server name, the protocol, the request method, the port, the path and the description are defined as results that are obtained by analyzing the registration request. The access count is set to 0. The final access date is defined as the date the entry is prepared, and a response indicating that registration of the new contents has been normally terminated is transmitted.

During a registered contents correction process 935, if the account name is not received from the preceding process, illegality processing is performed and a response indicating that an illegal operation was performed is transmitted to the Web client of the contents dealer. A registration request from the Web client of the contents dealer is then analyzed. As a result of the analysis, the unique name for the contents, a price, the server name of the contents dealer, the protocol name, the request method for the server of the contents dealer, the port number of the server of the contents dealer, the path to the contents and a description of the contents are obtained. An entry that is designated by the unique name of the contents database 660 is replaced by the above data. The final access date is defined as the date the entry is prepared, and a response indicating that the correction of the contents has been normally terminated is transmitted.

During a registered contents deletion process 945, if the account name is not received from the preceding process, illegality processing is performed and a response indicating that an illegal operation was performed is transmitted to the Web client of the contents dealer. A registration request from the Web client of the contents dealer is then analyzed. As a result of the analysis, a unique name for the contents is acquired. When there is no entry in the contents database 660 that is designated by the unique name, a response indicating that an illegal operation was performed is sent to the Web client of the contents dealer. When there is an entry, the entry is deleted from the contents database 660.

During a registered contents correction pre-process 955, if the account name is not received from the preceding process, illegality processing is performed and a response indicating that an illegal operation was performed is transmitted to the Web client of the contents dealer. A registration request from the Web client of the contents dealer is then analyzed. The result obtained by analysis is one, or none, of the item price, the server name of the contents dealer, the protocol name, the request method employed by the server of the contents dealer, the port number of the server of the contents dealer, the path to the contents or a description of the contents. For an entry found in the contents database 660 for which an account name matches that of a requester and matches the analysis results, or for an entry for which the name of the account matches that of the requester if no result is obtained by the analysis, a response is transmitted, so that a button for advancing to a correction process, a button for advancing to a deletion process, a unique name, a price, a server name, a protocol, a request method, a port number, a path, a description, an access count and a final access date are displayed on the Web client of the requester.

During a purchase increase process 965, if the account name is not received from the preceding process, illegality processing is performed and a response indicating that an illegal operation was performed is transmitted to the Web client. A registration request from the Web client is then analyzed. An external routine is called to determine the purchase of contents by using a name, an e-mail address, a credit card number or an authentication code that indicates payment for the contents has been made (this is issued by the organization operating the charge server), all of which are received from the Web client of the customer. For this external routine, the charge process for the credit card and the verification of the authentication code are performed by using the name, the e-mail address, the credit card number and the authentication code that indicates the payment was made (this is issued by the organization operating the charge server). The result is transmitted to the charge server program.

When the purchase is not approved, the charge server transmits a message to that effect to the Web client of the consumer. When the purchase is approved, the account database 670 is searched and an account entry is updated. Then, the balance is increased by an amount equivalent to the price of the purchased contents. The balance after the temporary money subtraction is left unchanged, and the final access date is set as the date the processing is performed. Following this, the entry in the ID information database 680 is updated. The updated account name is set as the account name, and the name and the e-mail address are defined as data received from the Web client. A payment confirmation field is defined as data received from the purchasing determination external routine. A response indicating the purchase increase process has been successfully completed is transmitted.

During a contents reference process 675, if the name of the account is not received from the preceding process, illegality processing is performed, and a response indicating that an illegal operation was performed is transmitted to the Web client of the contents dealer. A registration request from the Web client is then analyzed. The result obtained by the analysis is the unique name of the contents. The contents database 660 is searched for an entry for a corresponding unique name, which accompanied the request.

During an ID information reference process 985, if the account name is not received from the preceding process, illegality processing is performed, and a response indicating that an illegal operation was performed is transmitted to the Web client. An entry for the account name is searched for in the ID information database 680, and a name, an e-mail address and a payment confirmation field are transmitted as a response.

During a contents price reference process 995, if the account name is not received from the preceding process, illegality processing is performed, and a response indicating that an illegal operation was performed is transmitted to the Web client of the contents dealer. Then, a registration request received from the Web client is analyzed. The result obtained by the analysis is the unique name of the contents. The contents database 660 is searched and the price in an entry for a corresponding unique name is transmitted as a response.

During a contents purchasing process 998, if the account name is not received from the preceding process, illegality processing is performed, and a response indicating that an illegal operation was performed is transmitted to the Web client. Then, a registration request received from the Web client is analyzed. The results obtained by the analysis are the unique name of the contents and an argument. The contents database 660 is searched and an entry for the contents that correspond to the unique name is extracted. The account name received from the preceding process is employed to extract the account entry for a purchaser from the account database 670. When the purchaser's balance is less than the price of the contents, a response indicating the balance is insufficient is transmitted.

When the purchaser's balance is equal to or greater than the price of the contents, the purchaser's balance is reduced by an amount equivalent to the price of the contents, while the balance for the temporary subtraction is increased by an amount equivalent to the price of the contents. A request is issued to the server holding the contents in accordance with the server name, which is an entry in the contents database 660, the protocol, the request method and the port. At this time, the path for the request is combined with the path in the entry of the contents database 660 by using an option that is obtained by analyzing the request received from the Web client.

When the contents are acquired from the contents server, they are transmitted to the Web client of the purchaser. At the same time, the remaining balance of the account entry for the purchaser after the temporary subtraction is reduced by an amount equivalent to the contents price, while the balance of the account (the account of the dealer) in the entry of the contents database 660 is increased by an amount equivalent to the price. In addition, the final access dates in the account entry and in the entry of the contents database 660 are set as those when the processing is performed, and the count for the accessing of the entry in the contents database 660 is incremented by one. When not all of the contents could be transmitted to the Web client, or when a part or all of the data could not be obtained from the server holding the contents, the price of the contents is subtracted from the remaining balance for the account entry of the purchaser after the temporary subtraction, while the price of the contents is added to the balance of the dealer's account. In another case that does not correspond to the above processing, illegality processing is performed at step 999.

As another embodiment, the charge server of the present invention can serve as an access count detection server in accordance with the essence of the present invention. That is, an access count detection server is provided that obtains an exact record of a count for the accessing of a plurality of contents that the contents server holds. In the above embodiment, as a linking destination, the URL of the charge server is designated for the product button. When menu items in the HTML menu of the contents server, for which the access count is to be obtained, are registered in the charge server, and when the unique name of the charge server is entered in the menu items, an exact count (audience rating) for the accessing of the respective contents of the server can be obtained by employing the same arrangement as is used for the charge server.

As an additional embodiment, the charge server of the present invention can serve as an access count detection server for a search engine. The contents server is a server having a function (a search engine) for searching other URLs. To prepare an HTML menu for the search result obtained by the search function, when the URL acquired by the search is registered in the charge server and the unique name of the charge server is entered in the search result, the survey for obtaining the exact count for access of the URL, which is selected from the search results, can be performed with the same arrangement as is used for the charge server.

## Claims

1. An access charge server for accessing the contents of a site on a network, comprising:
(a) means for receiving from a customer access requests for the contents available at a specific contents server site;
(b) means for identifying said customer;
(c) means for identifying an owner of said contents, the location of said contents, a price for said contents, and a destination for said contents for reckoning a sale;
(d) means for, rather than said customer, accessing said contents;
(e) means for transmitting from said access charge server to said customer said contents that have been transferred from said contents server to said access charge server; and
(f) means for subtracting said price for said contents from information for said customer at said access charge server, and for adding said price of said contents to information for said destination for reckoning for a sale.

2. An access count server for counting the number of times the contents of a site on a network are accessed, comprising:
(a) means for receiving from a customer requests to access the contents of a specific contents server site;
(b) means for identifying an owner of said contents for which access is requested, the location of said contents, and a transmission destination for access count information;
(c) means for accessing said contents rather than said customer who issued said access requests;
(d) means for transmitting from said access count server to said customer said contents that have been transferred from said contents server to said access count server; and
(e) means for adding the number of accesses of said contents to said information concerning said transmission destination for said count information available at said access count server.

3. The access count server according to claim 2, wherefore said contents server is a server having a search function for searching contents held by said contents server or contents held by other sites on said network, and wherefore said contents for which access requests are issued by said customer are included in a search result obtained by the performance of said search by said search function.

4. An access charge method for accessing the contents of a site on a network, the method comprising the steps of:
(a) a charge server receiving an access request from a customer to access the contents held by a specific contents server;
(b) said charge server identifying said customer;
(c) said charge server identifying an owner of said contents for which the access request is issued, the location of said contents, the price of said contents, and the destination for reckoning a sale;
(d) said charge server effecting access of said contents rather than said customer who issued said access request;
(e) said charge server transmitting to said customer said contents after they are sent by said contents server to said charge server; and
(f) said charge server subtracting said price of said contents from customer information held by in said charge server, and adding said price for said contents to information concerning said destination for reckoning a sale.

5. An access count method for counting the number of times the contents of a site on a network are accessed, said method comprising the steps of:
(a) an access count server receiving an access request from a customer to access the contents in a specific contents server;
(b) said access count server identifying an owner of said contents for which the access request is issued, the location of said contents, and a transmission destination for count information;
(c) said access count server accessing said contents instead of said customer that has issued said access request;
(d) said access count server transmitting to said customer said contents after they are sent by said contents server to said count server; and
(e) said access count server adding the number of accesses for said contents to said information concerning said transmission destination for said count information held by said count server.

6. The access count method according to claim 5, wherefore said contents server is a server that includes a search function for searching the contents of said contents server or the contents of other sites on said network, and wherefore said contents for which access requests are issued by said customer are included in the search result obtained by the performance of said search by said search function.

7. A computer program product for enabling a computer to impose a charge when the contents of a site on a network are accessed, stored on a computer readable storage medium comprising:
(a) computer readable program code means for receiving from a customer requests to access the contents available at a specific contents server;
(b) computer readable program code means for identifying said customer;
(c) computer readable program code means for identifying an owner of said contents for which the accesses are requested, the location of said contents, a price for said contents, and a destination for said contents for reckoning a sale;
(d) computer readable program code means for accessing said contents rather than said customer who issued said access requests;
(e) computer readable program code means for transmitting from said contents server to said customer said contents that have been transferred from said contents server to said computer; and
(f) computer readable program code means for subtracting said price of said contents from customer information held by said computer and of adding said price of said contents to information for said destination for reckoning a sale.
